# EUROPEAN PATENT APPLICATION

(11) **EP 4 541 826 A1**
(43) Date of publication of application: **23.04.2025**
(21) Application number: 23827402.1
(22) Date of filing: 31.05.2023
(51) Int. Cl.: C08F 14/06, C08F 6/28, C08J 11/08

(54) **METHOD FOR PREPARING VINYL CHLORIDE-BASED POLYMER**

(30) Priority: 20.06.2022 KR 20220075101
(71) Applicant: LG Chem, Ltd., Yeongdeungpo-gu Seoul 07336 (KR)
(72) Inventor: LEE, Se Woong, Daejeon 34122 (KR); HA, Hyun Kyou, Daejeon 34122 (KR); KIM, Kun Ji, Daejeon 34122 (KR); BAE, Heung Kwon, Daejeon 34122 (KR); KIM, Hyun Chul, Daejeon 34122 (KR); CHOI, Yun Seok, Daejeon 34122 (KR)
(74) Representative: Goddar, Heinz J.
(86) International application number: PCT/KR2023/007463
(87) International publication number: WO 2023/249282

(57) **Abstract**

The present invention provides a method of preparing a vinyl chloride polymer, which includes: preparing a mixture by adding an alcohol to a vinyl chloride polymer slurry (S1); separating a waste liquid from the mixture to obtain a vinyl chloride polymer (S2); and adding at least a portion of the separated waste liquid to the mixture (S3); wherein a content of the waste liquid added in Step S3 is in the range of 33.0 to 35.0 parts by weight with respect to 100 parts by weight of the mixture.

## Description

### [Cross-Reference to Related Applications]

The present invention claims the benefit of priority to Korean patent application No. 10-2022-0075101 filed on June 20, 2022, the entire disclosure of which is hereby incorporated by reference in its entirety.

### [Technical Field]

The present invention relates to a method of preparing a vinyl chloride polymer, and specifically, provides a method of preparing a vinyl chloride polymer having excellent thermal stability and processability, while improving process efficiency.

### [Background Art]

A vinyl chloride polymer composition may include a vinyl chloride polymer and processing auxiliary raw materials such as heat stabilizers, processing aids, impact modifiers and the like. The vinyl chloride polymer composition may be used to manufacture products in various industrial fields, such as pipes, chassis, sheets and the like through processing facilities. The required physical properties of the vinyl chloride polymer composition vary depending on the product being manufactured, such as the number of protrusions, impact strength, tensile strength and so on. However, in general, the higher the processability of the vinyl chloride polymer, the higher the quality of the product that may be produced.

In order to improve the processability of products made using the vinyl chloride polymer, it is common to optimize the conditions of processing facilities, and the mixing ratio and input quantity of processing auxiliary raw materials. However, manufacturers are facing demands from consumers to improve the processability of the vinyl chloride polymer itself. To enhance the processability of the vinyl chloride polymer, methods such as adjusting the particle shape or internal porosity of the vinyl chloride polymer are available, and the addition of a C₄ to C₂₀ linear alkyl alcohol is a widely accepted method.

Meanwhile, when separating solvents such as water from a vinyl chloride polymer slurry prepared by suspension polymerization, it is critically important to manage a screw load of a separation device. The screw load may change depending on the ratio of the vinyl chloride polymer slurry and the solvent, particle size distribution and so forth. When the screw load increases beyond a certain level, the process may stop due to tripping or lead to equipment damage in severe cases.

The present invention aims to provide a method of preparing a vinyl chloride polymer with excellent thermal stability and processability, which is achieved by recycling the solvent generated during the manufacturing process, thereby reducing the viscosity of the vinyl chloride polymer slurry and allowing for stable separation of the vinyl chloride polymer.

### [Related Art Document]

### Patent Document

(Patent Document 1) KR2068709B

### [Technical Problem]

An objective of the present invention is to provide a method of preparing a vinyl chloride polymer having excellent thermal stability and processability, which improves process efficiency by recycling a waste liquid, an alcohol and the like generated during the manufacturing process.

### [Technical Solution]

In order to solve the aforementioned problems, 1) the present invention provides a method of preparing a vinyl chloride polymer, which comprises: preparing a mixture by adding an alcohol to a vinyl chloride polymer slurry (S1); separating a waste liquid from the mixture to obtain a vinyl chloride polymer (S2); and adding at least a portion of the separated waste liquid to the mixture (S3), wherein a content of the waste liquid added in Step S3 is in the range of 33.0 to 35.0 parts by weight with respect to 100 parts by weight of the mixture.
2) The present invention provides a method of preparing a vinyl chloride polymer according to above 1), wherein the alcohol is a C₄ to C₂₀ alkyl alcohol.
3) The present invention provides a method of preparing a vinyl chloride polymer according to above 1) or 2), wherein a content of the alcohol is in the range of 0.105 to 0.123 parts by weight with respect to 100 parts by weight of a solid content of the vinyl chloride polymer slurry.
4) The present invention provides a method of preparing a vinyl chloride polymer according to any one of above 1) to 3), wherein, in Step S2, the separation is centrifugal separation.
5) The present invention provides a method of preparing a vinyl chloride polymer according to any one of above 1) to 4), further comprising drying the vinyl chloride polymer obtained in step S2.
6) The present invention provides a method of preparing a vinyl chloride polymer according to any one of above 1) to 5), wherein the waste liquid added in Step S3 is prepared by separating the alcohol from a portion of the waste liquid separated in Step S2 and mixing the separated alcohol with the remainder of the separated waste liquid.
7) The present invention provides a method of preparing a vinyl chloride polymer according to above 6), wherein a portion of the waste liquid separated in Step S2 is in the range of 62.5 to 64.0 wt% with respect to the total weight of the waste liquid separated in Step S2.
8) The present invention provides a method of preparing a vinyl chloride polymer according to above 6), wherein the alcohol is subjected to oil-water separation.
9) The present invention provides a method of preparing a vinyl chloride polymer according to any one of above 1) to 8), wherein in the waste liquid added to the mixture, the alcohol is present in an amount of 2.0 to 3.0 wt%.
10) The present invention provides a method of preparing a vinyl chloride polymer according to any one of 1) to 9), wherein a content of the residual alcohol in the vinyl chloride polymer is in the range of 500 to 600 ppm.

### [Advantageous Effects]

The method of preparing a vinyl chloride polymer of the present invention can reduce the viscosity of a mixture containing a vinyl chloride slurry added to the separation device by recycling a waste liquid and an alcohol generated during the manufacturing process, thereby reducing the load of the separation device and improving process efficiency.

Further, a dry vinyl chloride polymer powder prepared by the method of preparing a vinyl chloride polymer of the present invention has excellent thermal stability and processability.

### [Description of Drawing]

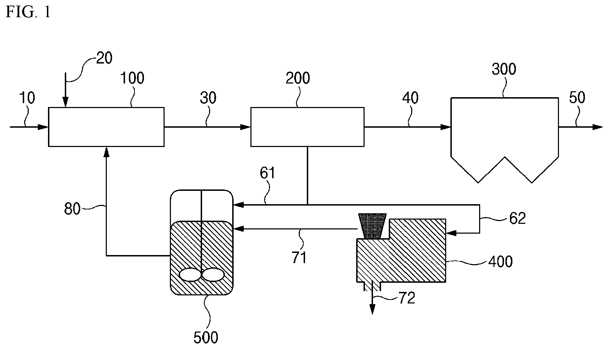

FIG. 1 is a view showing an example of a post-treatment device used in a method of preparing a vinyl chloride polymer according to an embodiment of the present invention.

### [Modes of the Invention]

Hereinafter, the present invention will be described in further detail to help in understanding of the present invention.

The terms and words used herein and in the claims should not be interpreted as being limited to conventional or dictionary meanings, but should be interpreted with meanings and concepts which are consistent with the technical spirit of the invention based on the principle that the inventors have appropriately defined concepts of terms in order to describe the invention in the best way.

### Definition of Terms

In the present invention, the term 'vinyl chloride monomer' may refer to not only a pure vinyl chloride monomer but also a mixture that includes the vinyl chloride monomer as a primary component and a vinyl monomer copolymerizable therewith. The vinyl monomer copolymerizable with the vinyl chloride monomer may be one or more selected from the group consisting of ethylene, propylene, vinyl acetate, vinyl propionate, acrylonitrile, methyl vinyl ether, ethyl vinyl ether, acrylic acid, methacrylic acid, itaconic acid and maleic acid.

In the present invention, a 'vinyl chloride polymer slurry' may be prepared by suspension polymerization of vinyl chloride monomers. Specifically, it may be prepared by suspension polymerization of vinyl chloride monomers in the presence of an initiator, a suspending agent and a solvent.

In the present invention, a 'C₄ to C₂₀ alkyl alcohol' may be one or more selected from the group consisting of n-butanol, t-butanol, isobutanol, n-pentanol, t-pentanol, isopentanol, n-hexanol, t-hexanol, isohexanol, n-heptanol, t-heptanol, isoheptanol, n-octanol, t-octanol, isooctanol, n-nonanol, t-nonanol, isononanol, n-decanol, t-decanol, isodecanol, n-undecanol, t-undecanol, isoundecanol, n-dodecanol, t-dodecanol, isododecanol, n-tridecanol, t-tridecanol, isotridecanol, n-tetradecanol, t-tetradecanol, isotetradecanol, n-pentadecanol, t-pentadecanol, isopentadecanol, 1-hexadecanol, 2-hexadecanol, 3-hexadecanol, 4-hexadecanol, 5-hexadecanol, 6-hexadecanol, 7-hexadecanol, 8-hexadecanol, 2-butyl-1-dodecanol, 2-hexyl-1-decanol, 9-methyl-pentadeca-7-ol, 2-heptyl-1-nonanol, n-heptadecanol, t-heptadecanol, isoheptadecanol, n-octadecanol, t-octadecanol, isooctadecanol, n-nonadecanol, t-nonadecanol, isononadecanol, n-eicosanol, t-eicosanol, and isoeicosanol.

The invention may be carried out in stationary state. The term 'stationary state' is defined as a condition where a manufacturing system of a dry vinyl chloride polymer powder maintains a constant state, that is, state variables remain constant over time during the flow through the manufacturing system.

### Method of Preparing Vinyl Chloride Polymer

A method of preparing a vinyl chloride polymer according to an embodiment of the present invention comprises: preparing a mixture by adding an alcohol to a vinyl chloride polymer slurry (S1); separating a waste liquid from the mixture to obtain a vinyl chloride polymer (S2); and adding at least a portion of the separated waste liquid to the mixture (S3), wherein a content of the waste liquid added in Step S3 is in the range of 33.0 to 35.0 parts by weight with respect to 100 parts by weight of the mixture.

Hereinafter, each step of preparing a dry vinyl chloride polymer powder according to an embodiment of the present invention will be described in detail.

### 1) Step S1

First, a mixture is prepared by adding an alcohol to a vinyl chloride polymer slurry.

The alcohol may be a C₄ to C₂₀ alkyl alcohol, and preferably, may be a C₁₀ to C₂₀ alkyl alcohol which improves processability without negatively affecting transparency and thermal stability.

The content of the alcohol may be in the range of 0.105 to 0.123 parts by weight, preferably 0.110 to 0.100 parts by weight, with respect to 100 parts by weight of the solid content of the vinyl chloride polymer slurry. By satisfying the above-described conditions, the thermal stability and processability of the vinyl chloride polymer may be further improved.

### 2) Step S2

Subsequently, a waste liquid is separated from the mixture to obtain a vinyl chloride polymer.

The separation may be centrifugal separation, and preferably, may be screw-squeezing-type centrifugal separation. By satisfying the above-described conditions, the slurry in a flowing state may be uniformly dehydrated to a stationary state.

Moreover, a step of drying the obtained vinyl chloride polymer may be further included. The drying temperature may be in the range of 50 to 70 °C, and preferably, 55 to 65 °C. When dried under the above-described conditions, residual solvent may be maximally removed without damaging the vinyl chloride polymer.

The content of residual alcohol in the obtained vinyl chloride polymer may be in the range of 500 to 600 ppm, and preferably, 550 to 580 ppm. When the aforementioned conditions are satisfied, processability may be enhanced without deteriorating the thermal stability of the vinyl chloride polymer.

### 3) Step S3

Subsequently, at least a portion of the separated waste liquid is added to the mixture.

Here, the content of the waste liquid added to the mixture is in the range of 33.0 to 35.0 parts by weight, preferably 33.5 to 34.5 parts by weight, with respect to 100 parts by weight of the mixture.

When the aforementioned range is satisfied, the viscosity of the mixture of the vinyl chloride polymer slurry, the alcohol, and the waste liquid is lowered to an appropriate level. This may maintain the load of the separation device, specifically, the screw load of the separation device, at a low level, thereby improving process efficiency. Furthermore, the melting time is shortened while maintaining the thermal stability of the vinyl chloride polymer, thereby enhancing processability.

However, when the content of the waste liquid added is lower than the aforementioned range, the viscosity of the mixture of the vinyl chloride polymer slurry, the alcohol, and the waste liquid does not decrease sufficiently, increasing the load of the separation device, and thus, reducing process efficiency. When the content of the waste liquid added is higher than the aforementioned range, the waste liquid is not properly separated from the mixture of the vinyl chloride polymer slurry, the alcohol, and the waste liquid, resulting in high moisture content in a wet vinyl chloride polymer powder. This could make it difficult to produce a normal dry vinyl chloride polymer powder, even when a drying process is performed.

Meanwhile, in the waste liquid added to the mixture, the alcohol may be present in an amount of 2.0 to 3.0 wt%, preferably 2.3 to 2.8 wt%.

By satisfying the aforementioned conditions, it is possible to improve processability without impairing the color and transparency of the end product.

The waste liquid added to the mixture may be prepared by separating the alcohol from a portion of the waste liquid separated in Step S2, and mixing the separated alcohol with the remainder of the separated waste liquid.

The content of a portion of the waste liquid separated in Step S2 may be in the range of 62.5 to 64 wt%, preferably 63.0 to 63.7 wt%, with respect to the total weight of the waste liquid separated in Step S2. When the aforementioned range is satisfied, the viscosity of the mixture of the vinyl chloride polymer slurry, the alcohol, and the waste liquid is decreased to a suitable level. As a result, the load of the separation device, specifically, the screw load of the separation device, may be maintained at a low level, improving process efficiency. Moreover, the melting time may be reduced while maintaining the thermal stability of the vinyl chloride polymer, thereby enhancing processability.

The separation of the alcohol may be oil-water separation, but is not particularly limited as long as the separation uses the difference in density of different solvents.

In addition, the remainder of the separated waste liquid refers to the remaining amount excluding the amount used to separate the alcohol in the waste liquid separated in Step S2.

The remainder of the separated waste liquid and the separated alcohol may be uniformly mixed.

Meanwhile, after adding a portion of the separated waste liquid to the mixture, the waste liquid may be separated to obtain a vinyl chloride polymer. This process may be identical to Step S2.

The residual alcohol content (based on weight) in the obtained vinyl chloride polymer may be in the range of 500 to 600 ppm, preferably 530 to 580 ppm. When the aforementioned conditions are satisfied, processability may be enhanced without deteriorating the thermal stability of the vinyl chloride polymer.

Meanwhile, a post-treatment device used in the method of preparing a vinyl chloride polymer according to an embodiment of the present invention is not particularly limited as long as it is used in the technical field of the present invention. However, to facilitate comprehension, it is described with reference to FIG. 1.

Referring to FIG. 1, the post-treatment device includes a mixer 100, a centrifuge 200, a dryer 300, an oil-water separator 400, and a waste liquid storage tank 500.

The mixer 100 is a device for mixing the vinyl chloride polymer slurry, the alcohol, and the waste liquid, and may be connected to a vinyl chloride polymer slurry transfer pipe 10, an alcohol transfer pipe 20, and a waste liquid transfer pipe 80.

The mixture generated in the mixer 100 may be transferred to the centrifuge 200 through a mixture transfer pipe 30.

In the centrifuge 200, it is possible to separate a wet vinyl chloride polymer powder and the waste liquid from the mixture. The vinyl chloride polymer wet powder may be transferred to the dryer 300 through a wet vinyl chloride polymer powder transfer pipe 40.

In the dryer 300, the wet vinyl chloride polymer powder may be dried to prepare a dry vinyl chloride polymer powder. The dry vinyl chloride polymer powder may be transferred to the outside through a dry vinyl chloride polymer powder transfer pipe 50.

A portion of the waste liquid separated in the centrifuge 200 may be transferred to the oil-water separator 400 through a waste liquid transfer pipe 62. The remainder of the separated waste liquid may be transferred to the waste liquid storage tank 500.

In the oil-water separator 400, an alcohol and a waste liquid are separated from the waste liquid, and the alcohol may be transferred to the waste liquid storage tank 500 through an alcohol transfer pipe 71. The waste liquid may be transferred to the outside through a waste liquid transfer pipe 72.

The waste liquid stored in the waste liquid storage tank 500 may be transferred to the mixer 100 through the waste liquid transfer pipe 80 and recycled.

Hereinafter, the present invention will be described in more detail with reference to the following examples. These examples are provided only for illustration of the present invention and should not be construed as limiting the scope and spirit of the present invention. Various modifications and alterations of the invention fall within the scope of the invention and the scope of the invention is defined by the accompanying claims.

### Example 1

A mixture was prepared by adding 2-hexyl-1-decanol to a vinyl chloride polymer slurry prepared by suspension polymerization and mixing uniformly. Here, the alcohol content was 0.110 parts by weight with respect to 100 parts by weight of the solid content of the vinyl chloride polymer slurry.

First, a first waste liquid was centrifuged from the mixture to obtain a first wet vinyl chloride polymer powder. The first wet vinyl chloride polymer powder was dried at 60 °C to prepare a first dry vinyl chloride polymer powder.

Subsequently, 2-hexyl-1-decanol was subjected to oil-water separation from 64.0 wt% of the first waste liquid. A second waste liquid was prepared by uniformly mixing the 2-hexyl-1-decanol subjected to oil-water separation and 36.0 wt% of the first waste liquid.

Subsequently, 33.0 parts by weight of the second waste liquid was added to 100 parts by weight of the mixture, and mixed uniformly.

Thereafter, a third waste liquid was centrifuged from the mixture to obtain a second wet vinyl chloride polymer powder. The second wet vinyl chloride polymer powder was dried at 60 °C to prepare a second dry vinyl chloride polymer powder.

Subsequently, 2-hexyl-1-decanol was subjected to oil-water separation from 64.0 wt% of the third waste liquid. A fourth waste liquid was prepared by uniformly mixing the 2-hexyl-1-decanol subjected to oil-water separation and 36.0 wt% of the third waste liquid.

Meanwhile, the above-described method of preparing a vinyl chloride polymer was performed in a stationary state.

### Example 2

First and second dry vinyl chloride polymer powders were prepared in the same manner as in Example 1 except that, in Example 1, 2-hexyl-1-decanol was subjected to oil-water separation from 63.3 wt% of the first waste liquid, the second waste liquid was prepared by uniformly mixing the 2-hexyl-1-decanol subjected to oil-water separation and 36.7 wt% of the first waste liquid, 33.0 parts by weight of the second waste liquid was added to 100 parts by weight of the mixture, and mixed uniformly, 2-hexyl-1-decanol was subjected to oil-water separation from 63.3 wt% of the third waste liquid, and the fourth waste liquid was prepared by uniformly mixing the 2-hexyl-1-decanol subjected to oil-water separation and 36.7 wt% of the third waste liquid.

### Example 3

First and second dry vinyl chloride polymer powders were prepared in the same manner as in Example 1 except that, in Example 1, 2-hexyl-1-decanol was subjected to oil-water separation from 62.5 wt% of the first waste liquid, the second waste liquid was prepared by uniformly mixing the 2-hexyl-1-decanol subjected to oil-water separation and 37.5 wt% of the first waste liquid, 35.0 parts by weight of the second waste liquid was added to 100 parts by weight of the mixture, and mixed uniformly, 2-hexyl-1-decanol was subjected to oil-water separation from 62.5 wt% of the third waste liquid, and the fourth waste liquid was prepared by uniformly mixing the 2-hexyl-1-decanol subjected to oil-water separation and 37.5 wt% of the third waste liquid.

### Example 4

A mixture was prepared by adding 2-hexyl-1-decanol to the vinyl chloride polymer slurry prepared by suspension polymerization and mixing uniformly. Here, the alcohol content was 0.115 parts by weight with respect to 100 parts by weight of the solid content of the vinyl chloride polymer slurry.

First, a first waste liquid was centrifuged from the mixture to obtain a first wet vinyl chloride polymer powder. The first wet vinyl chloride polymer powder was dried at 60 °C to prepare a first dry vinyl chloride polymer powder.

Subsequently, 2-hexyl-1-decanol was subjected to oil-water separation from 63.7 wt% of the first waste liquid. A second waste liquid was prepared by uniformly mixing the 2-hexyl-1-decanol subjected to oil-water separation and 36.3 wt% of the first waste liquid.

Subsequently, 33.5 parts by weight of the second waste liquid was added to 100 parts by weight of the mixture, and mixed uniformly.

Thereafter, a third waste liquid was centrifuged from the mixture to obtain a second wet vinyl chloride polymer powder. The second wet vinyl chloride polymer powder was dried at 60 °C to prepare a second dry vinyl chloride polymer powder.

Subsequently, 2-hexyl-1-decanol was subjected to oil-water separation from 63.7 wt% of the third waste liquid. A fourth waste liquid was prepared by uniformly mixing the 2-hexyl-1-decanol subjected to oil-water separation and 36.3 wt% of the third waste liquid.

Meanwhile, the above-described method of preparing a vinyl chloride polymer was performed in a stationary state.

### Example 5

First and second dry vinyl chloride polymer powders were prepared in the same manner as in Example 4 except that, in Example 4, 2-hexyl-1-decanol was subjected to oil-water separation from 63.4 wt% of the first waste liquid, the second waste liquid was prepared by uniformly mixing the 2-hexyl-1-decanol subjected to oil-water separation and 36.6 wt% of the first waste liquid, 33.9 parts by weight of the second waste liquid was added to 100 parts by weight of the mixture, and mixed uniformly, 2-hexyl-1-decanol was subjected to oil-water separation from 63.4 wt% of the third waste liquid, and the fourth waste liquid was prepared by uniformly mixing the 2-hexyl-1-decanol subjected to oil-water separation and 36.6 wt% of the third waste liquid.

### Example 6

First and second dry vinyl chloride polymer powders were prepared in the same manner as in Example 4 except that, in Example 4, 2-hexyl-1-decanol was subjected to oil-water separation from 63.1 wt% of the first waste liquid, the second waste liquid was prepared by uniformly mixing the 2-hexyl-1-decanol subjected to oil-water separation and 36.9 wt% of the first waste liquid, 34.3 parts by weight of the second waste liquid was added to 100 parts by weight of the mixture, and mixed uniformly, 2-hexyl-1-decanol was subjected to oil-water separation from 63.1 wt% of the third waste liquid, and the fourth waste liquid was prepared by uniformly mixing the 2-hexyl-1-decanol subjected to oil-water separation and 36.9 wt% of the third waste liquid.

### Example 7

A mixture was prepared by adding 2-hexyl-1-decanol to the vinyl chloride polymer slurry prepared by suspension polymerization and mixing uniformly. Here, the alcohol content was 0.120 parts by weight with respect to 100 parts by weight of the solid content of the vinyl chloride polymer slurry.

First, a first waste liquid was centrifuged from the mixture to obtain a first wet vinyl chloride polymer powder. The first wet vinyl chloride polymer powder was dried at 60 °C to prepare a first dry vinyl chloride polymer powder.

Subsequently, 2-hexyl-1-decanol was subjected to oil-water separation from 64.0 wt% of the first waste liquid. A second waste liquid was prepared by uniformly mixing the 2-hexyl-1-decanol subjected to oil-water separation and 36.0 wt% of the first waste liquid.

Subsequently, 33.1 parts by weight of the second waste liquid was added to 100 parts by weight of the mixture, and mixed uniformly.

Thereafter, a third waste liquid was centrifuged from the mixture to obtain a second wet vinyl chloride polymer powder. The second wet vinyl chloride polymer powder was dried at 60 °C to prepare a second dry vinyl chloride polymer powder.

Subsequently, 2-hexyl-1-decanol was subjected to oil-water separation from 64.0 wt% of the third waste liquid. A fourth waste liquid was prepared by uniformly mixing the 2-hexyl-1-decanol subjected to oil-water separation and 36.0 wt% of the third waste liquid.

Meanwhile, the above-described method of preparing a vinyl chloride polymer was performed in a stationary state.

### Example 8

First and second dry vinyl chloride polymer powders were prepared in the same manner as in Example 7 except that, in Example 7, 2-hexyl-1-decanol was subjected to oil-water separation from 63.3 wt% of the first waste liquid, the second waste liquid was prepared by uniformly mixing the 2-hexyl-1-decanol subjected to oil-water separation and 36.7 wt% of the first waste liquid, 34.1 parts by weight of the second waste liquid was added to 100 parts by weight of the mixture, and mixed uniformly, 2-hexyl-1-decanol was subjected to oil-water separation from 63.3 wt% of the third waste liquid, and the fourth waste liquid was prepared by uniformly mixing the 2-hexyl-1-decanol subjected to oil-water separation and 36.7 wt% of the third waste liquid.

### Example 9

First and second dry vinyl chloride polymer powders were prepared in the same manner as in Example 7 except that, in Example 7, 2-hexyl-1-decanol was subjected to oil-water separation from 62.7 wt% of the first waste liquid, the second waste liquid was prepared by uniformly mixing the 2-hexyl-1-decanol subjected to oil-water separation and 37.3 wt% of the first waste liquid, 34.9 parts by weight of the second waste liquid was added to 100 parts by weight of the mixture, and mixed uniformly, 2-hexyl-1-decanol was subjected to oil-water separation from 62.7 wt% of the third waste liquid, and the fourth waste liquid was prepared by uniformly mixing the 2-hexyl-1-decanol subjected to oil-water separation and 37.3 wt% of the third waste liquid.

### Comparative Example 1

A mixture was prepared by adding 2-hexyl-1-decanol to the vinyl chloride polymer slurry prepared by suspension polymerization and mixing uniformly. Here, the alcohol content was 0.110 parts by weight with respect to 100 parts by weight of the solid content of the vinyl chloride polymer slurry.

First, a first waste liquid was centrifuged from the mixture to obtain a first wet vinyl chloride polymer powder. The first wet vinyl chloride polymer powder was dried at 60 °C to prepare a first dry vinyl chloride polymer powder.

### Comparative Example 2

First and second dry vinyl chloride polymer powders were prepared in the same manner as in Example 1 except that, in Example 1, 2-hexyl-1-decanol was subjected to oil-water separation from 64.8 wt% of the first waste liquid, the second waste liquid was prepared by uniformly mixing the 2-hexyl-1-decanol subjected to oil-water separation and 35.2 wt% of the first waste liquid, 32.0 parts by weight of the second waste liquid was added to 100 parts by weight of the mixture, and mixed uniformly, 2-hexyl-1-decanol was subjected to oil-water separation from 64.8 wt% of the third waste liquid, and the fourth waste liquid was prepared by uniformly mixing the 2-hexyl-1-decanol subjected to oil-water separation and 35.2 wt% of the third waste liquid.

### Comparative Example 3

First and second dry vinyl chloride polymer powders were prepared in the same manner as in Example 1 except that, in Example 1, 2-hexyl-1-decanol was subjected to oil-water separation from 61.8 wt% of the first waste liquid, the second waste liquid was prepared by uniformly mixing the 2-hexyl-1-decanol subjected to oil-water separation and 38.2 wt% of the first waste liquid, 36.0 parts by weight of the second waste liquid was added to 100 parts by weight of the mixture, and mixed uniformly, 2-hexyl-1-decanol was subjected to oil-water separation from 61.8 wt% of the third waste liquid, and the fourth waste liquid was prepared by uniformly mixing the 2-hexyl-1-decanol subjected to oil-water separation and 38.2 wt% of the third waste liquid.

### Comparative Example 4

A mixture was prepared by adding 2-hexyl-1-decanol to the vinyl chloride polymer slurry prepared by suspension polymerization and mixing uniformly. Here, the alcohol content was 0.115 parts by weight with respect to 100 parts by weight of the solid content of the vinyl chloride polymer slurry.

First, a first waste liquid was centrifuged from the mixture to obtain a first wet vinyl chloride polymer powder. The first wet vinyl chloride polymer powder was dried at 60 °C to prepare a first dry vinyl chloride polymer powder.

### Comparative Example 5

First and second dry vinyl chloride polymer powders were prepared in the same manner as in Example 4 except that, in Example 4, 2-hexyl-1-decanol was subjected to oil-water separation from 64.5 wt% of the first waste liquid, the second waste liquid was prepared by uniformly mixing the 2-hexyl-1-decanol subjected to oil-water separation and 35.5 wt% of the first waste liquid, 32.5 parts by weight of the second waste liquid was added to 100 parts by weight of the mixture, and mixed uniformly, 2-hexyl-1-decanol was subjected to oil-water separation from 64.5 wt% of the third waste liquid, and the fourth waste liquid was prepared by uniformly mixing the 2-hexyl-1-decanol subjected to oil-water separation and 35.5 wt% of the third waste liquid.

### Comparative Example 6

First and second dry vinyl chloride polymer powders were prepared in the same manner as in Example 4 except that, in Example 4, 2-hexyl-1-decanol was subjected to oil-water separation from 62.2 wt% of the first waste liquid, the second waste liquid was prepared by uniformly mixing the 2-hexyl-1-decanol subjected to oil-water separation and 37.8 wt% of the first waste liquid, 35.5 parts by weight of the second waste liquid was added to 100 parts by weight of the mixture, and mixed uniformly, 2-hexyl-1-decanol was subjected to oil-water separation from 62.2 wt% of the third waste liquid, and the fourth waste liquid was prepared by uniformly mixing the 2-hexyl-1-decanol subjected to oil-water separation and 37.8 wt% of the third waste liquid.

### Comparative Example 7

A mixture was prepared by adding 2-hexyl-1-decanol to the vinyl chloride polymer slurry prepared by suspension polymerization and mixing uniformly. Here, the alcohol content was 0.120 parts by weight with respect to 100 parts by weight of the solid content of the vinyl chloride polymer slurry.

First, a first waste liquid was centrifuged from the mixture to obtain a first wet vinyl chloride polymer powder. The first wet vinyl chloride polymer powder was dried at 60 °C to prepare a first dry vinyl chloride polymer powder.

### Comparative Example 8

First and second dry vinyl chloride polymer powders were prepared in the same manner as in Example 7 except that, in Example 7, 2-hexyl-1-decanol was subjected to oil-water separation from 64.7 wt% of the first waste liquid, the second waste liquid was prepared by uniformly mixing the 2-hexyl-1-decanol subjected to oil-water separation and 35.3 wt% of the first waste liquid, 32.2 parts by weight of the second waste liquid was added to 100 parts by weight of the mixture, and mixed uniformly, 2-hexyl-1-decanol was subjected to oil-water separation from 64.7 wt% of the third waste liquid, and the fourth waste liquid was prepared by uniformly mixing the 2-hexyl-1-decanol subjected to oil-water separation and 35.3 wt% of the third waste liquid.

### Comparative Example 9

First and second dry vinyl chloride polymer powders were prepared in the same manner as in Example 7 except that, in Example 7, 2-hexyl-1-decanol was subjected to oil-water separation from 62.0 wt% of the first waste liquid, the second waste liquid was prepared by uniformly mixing the 2-hexyl-1-decanol subjected to oil-water separation and 38.0 wt% of the first waste liquid, 35.8 parts by weight of the second waste liquid was added to 100 parts by weight of the mixture, and mixed uniformly, 2-hexyl-1-decanol was subjected to oil-water separation from 62.0 wt% of the third waste liquid, and the fourth waste liquid was prepared by uniformly mixing the 2-hexyl-1-decanol subjected to oil-water separation and 38.0 wt% of the third waste liquid.

### Experimental Example 1

The content of the alcohol (2-hexyl-1-decanol) in the second waste liquid of Examples and Comparative Examples was analyzed using liquid chromatography, and a calibration curve was plotted to quantify and measure the content of the alcohol in the second waste liquid. The results are shown in Tables 1 to 3 below.

### Experimental Example 2

The physical properties of the first dry vinyl chloride polymer powders of Comparative Examples 1, 4, and 7, and the second dry vinyl chloride polymer powders of Examples 1 to 9 and Comparative Examples 2, 3, 5, 6, 8, and 9, were evaluated using the methods described below and are shown in Tables 1 to 3 below.

### 1) Content of Residual Alcohol (2-hexyl-1-decanol) (ppm by weight)

After dissolving 1.0 g of a dry vinyl chloride polymer powder in chloroform, a vinyl chloride polymer was precipitated using methanol. The supernatant was then separated and filtered, followed by analysis of additive components using LC/MS. The content of 2-hexyl-1-decanol in the vinyl chloride polymer was quantified and analyzed by drawing a calibration curve through the analysis of a 2-hexyl-1-decanol standard solution.

### 2) Measurement of Melting Time

100 parts by weight of a dry vinyl chloride polymer powder, 3 parts by weight of a Ca-Zn stabilizer (CZ-200 from SONGWON Industrial Co. Ltd.), 5 parts by weight of an impact modifier (MB838 from LG Chem, Ltd.), 1 part by weight of titanium dioxide, and 100 parts by weight of calcium carbonate were kneaded using a measuring mixer at 170 °C and 45 rpm. After a kneading load increased due to the initial sample input and stabilized, the time at which the kneading load increased to the maximum value due to melting was measured as the melting time.

### 3) Thermal Stability Evaluation of Vinyl Chloride Polymer

100 parts by weight of a vinyl chloride polymer powder, 2 parts by weight of a Ca-Zn stabilizer (CZ-200 from SONGWON Industrial Co. Ltd.), 1 part by weight of an acrylic processing aid (PA-912 from LG Chem, Ltd.), and 0.5 part by weight of titanium dioxide were kneaded using a 6-inch roll mill at 185 °C for 5 minutes, and then a sheet with a thickness of 0.2 mm was produced. The thermal stability of this sheet was evaluated by measuring its whiteness index (W.I) using the L, a, b method.

**Table 1**

| Classification | Comparative Example 1 | Comparative Example 2 | Example 1 | Example 2 | Example 3 | Comparative Example 3 |
|---|---|---|---|---|---|---|
| Alcohol Content (parts by weight) | 0.110 | 0.110 | 0.110 | 0.110 | 0.110 | 0.110 |
| Content of First Waste Liquid to be Subjected to Oil-Water Separation (wt%) | - | 64.8 | 64.0 | 63.3 | 62.5 | 61.8 |
| Content of Second Waste Liquid (parts by weight) | - | 32.0 | 33.0 | 34.0 | 35.0 | 36.0 |
| Content of Alcohol in Second Waste Liquid (wt%) | - | 2.62 | 2.56 | 2.50 | 2.44 | 2.39 |
| Torque of Centrifuge (Nm) | 158 | 144 | 137 | 134 | 132 | 130 |
| Residual Alcohol Content (ppm) | 33 | 499 | 508 | 517 | 531 | 552 |
| Melting Time (seconds) | 147 | 117 | 115 | 114 | 111 | Not Measurable |
| Whiteness Index | 78.8 | 78.7 | 78.9 | 78.8 | 78.8 | |
| Alcohol content: the alcohol content with respect to 100 parts by weight of the solid content of the vinyl chloride polymer slurry | | | | | | |
| Content of first waste liquid to be subjected to oil-water separation: the content of the first waste liquid in which 2-hexyl-1-decanol is subjected to oil-water separation | | | | | | |
| Content of second waste liquid: the content of the second waste liquid with respect to 100 parts by weight of the mixture of the vinyl chloride polymer slurry and alcohol | | | | | | |
| Torque of centrifuge: the torque of the centrifuge used for separating the second wet vinyl chloride polymer powder | | | | | | |
| Residual alcohol content: the content of the residual alcohol in the second dry vinyl chloride polymer powder | | | | | | |

**Table 2**

| Classification | Comparative Example 4 | Comparative Example 5 | Example 4 | Example 5 | Example 6 | Comparative Example 6 |
|---|---|---|---|---|---|---|
| Alcohol Content (parts by weight) | 0.115 | 0.115 | 0.115 | 0.115 | 0.115 | 0.115 |
| Content of First Waste Liquid to be Subjected to Oil-Water Separation (wt%) | - | 64.5 | 63.7 | 63.4 | 63.1 | 62.2 |
| Content of Second Waste Liquid (parts by weight) | - | 32.5 | 33.5 | 33.9 | 34.3 | 35.5 |
| Content of Alcohol in Second Waste Liquid (wt%) | - | 2.60 | 2.53 | 2.51 | 2.49 | 2.42 |
| Torque of Centrifuge (Nm) | 157 | 143 | 136 | 134 | 135 | 131 |
| Residual Alcohol Content (ppm) | 35 | 546 | 556 | 562 | 569 | 573 |
| Melting Time (seconds) | 144 | 111 | 109 | 108 | 107 | Not Measurable |
| Whiteness Index | 78.8 | 78.5 | 78.4 | 78.4 | 78.3 | |
| Alcohol content: the alcohol content with respect to 100 parts by weight of the solid content of the vinyl chloride polymer slurry | | | | | | |
| Content of first waste liquid to be subjected to oil-water separation: the content of the first waste liquid in which 2-hexyl-1-decanol is subjected to oil-water separation | | | | | | |
| Content of second waste liquid: the content of the second waste liquid with respect to 100 parts by | | | | | | |
| weight of the mixture of the vinyl chloride polymer slurry and alcohol | | | | | | |
| Torque of centrifuge: the torque of the centrifuge used for separating the second wet vinyl chloride polymer powder | | | | | | |
| Residual alcohol content: the content of the residual alcohol in the second dry vinyl chloride polymer powder | | | | | | |

**Table 3**

| Classification | Comparative Example 7 | Comparative Example 8 | Example 7 | Example 8 | Example 9 | Comparative Example 9 |
|---|---|---|---|---|---|---|
| Alcohol Content (parts by weight) | 0.120 | 0.120 | 0.120 | 0.120 | 0.120 | 0.120 |
| Content of First Waste Liquid to be Subjected to Oil-Water Separation (wt%) | - | 64.7 | 64.0 | 63.3 | 62.7 | 62.0 |
| Content of Second Waste Liquid (parts by weight) | - | 32.2 | 33.1 | 34.1 | 34.9 | 35.8 |
| Content of Alcohol in Second Waste Liquid (wt%) | - | 2.61 | 2.56 | 2.50 | 2.46 | 2.41 |
| Torque of Centrifuge (Nm) | 157 | 142 | 137 | 135 | 133 | 130 |
| Residual Alcohol Content (ppm) | 36 | 575 | 584 | 587 | 596 | 605 |
| Melting Time (seconds) | 145 | 108 | 105 | 105 | 104 | Not Measurable |
| Whiteness Index | 78.8 | 78.2 | 78.2 | 78.2 | 78.1 | |
| Alcohol content: the alcohol content with respect to 100 parts by weight of the solid content of the vinyl chloride polymer slurry | | | | | | |
| Content of first waste liquid to be subjected to oil-water separation: the content of the first waste liquid in which 2-hexyl-1-decanol is subjected to oil-water separation | | | | | | |
| Content of second waste liquid: the content of the second waste liquid with respect to 100 parts by weight of the mixture of the vinyl chloride polymer slurry and alcohol | | | | | | |
| Torque of centrifuge: the torque of the centrifuge used for separating the second wet vinyl chloride polymer powder | | | | | | |
| Residual Alcohol Content: the content of the residual alcohol in the second dry vinyl chloride polymer powder | | | | | | |

Referring to Table 1, in Examples 1 to 3, in which the content of the second waste liquid is in the range of 33.0 to 35.0 parts by weight with respect to 100 parts by weight of the mixture of the vinyl chloride polymer slurry and the alcohol, the viscosity of the mixture of the vinyl chloride polymer slurry, the alcohol, and the second waste liquid was appropriate. This resulted in a decreased screw load of the centrifuge during the centrifugal separation of the mixture. Moreover, it can be seen that the melting time was shortened without any decrease in thermal stability, thus improving processability. However, in Comparative Example 1, in which no waste liquid was recycled, the viscosity of the mixture of the vinyl chloride polymer slurry and the alcohol was high, resulting in an increased screw load of the centrifuge during the centrifugal separation of the mixture.

Further, in Comparative Example 2, in which the content of the second waste liquid was 32.0 parts by weight with respect to 100 parts by weight of the mixture of the vinyl chloride polymer slurry and the alcohol, the viscosity of the mixture of the vinyl chloride polymer slurry, the alcohol, and the second waste liquid was high, resulting in a high screw load of the centrifuge during the centrifugal separation of the mixture.

**In** addition, in Comparative Example 3, in which the content of the second waste liquid was 36.0 parts by weight with respect to 100 parts by weight of the mixture of the vinyl chloride polymer slurry and the alcohol, the second wet vinyl chloride polymer powder was not properly dried, thus a normal second dry vinyl chloride polymer powder was not produced.

Referring to Table 2, in Examples 4 to 6, in which the content of the second waste liquid is in the range of 33.5 to 34.3 parts by weight with respect to 100 parts by weight of the mixture of the vinyl chloride polymer slurry and the alcohol, the viscosity of the mixture of the vinyl chloride polymer slurry, the alcohol, and the second waste liquid was appropriate, leading to a decreased screw load of the centrifuge during the centrifugal separation of the mixture. Furthermore, it can be seen that the melting time was shortened without any decrease in thermal stability, thereby improving processability.

However, in Comparative Example 4, in which no waste liquid was recycled, the viscosity of the mixture was high, resulting in a high screw load of the centrifuge during centrifugal separation.

Moreover, in Comparative Example 5, in which the content of the second waste liquid was 32.5 parts by weight with respect to 100 parts by weight of the mixture of the vinyl chloride polymer slurry and the alcohol, the viscosity of the mixture of the vinyl chloride polymer slurry, the alcohol, and the second waste liquid was high. This resulted in a high screw load of the centrifuge during the centrifugal separation of the mixture.

Further, in Comparative Example 6, in which the content of the second waste liquid was 35.5 parts by weight with respect to 100 parts by weight of the mixture of the vinyl chloride polymer slurry and the alcohol, the second wet vinyl chloride polymer powder was not properly dried, thus a normal second dry vinyl chloride polymer powder was not produced.

Referring to Table 3, in Examples 7 to 9, in which the content of the second waste liquid was in the range of 33.1 to 34.9 parts by weight with respect to 100 parts by weight of the mixture of the vinyl chloride polymer slurry and the alcohol, the viscosity of the mixture of the vinyl chloride polymer slurry, the alcohol, and the second waste liquid was appropriate. This resulted in a decreased screw load of the centrifuge during the centrifugal separation of the mixture. Furthermore, it can be seen that the melting time was shortened without any decrease in thermal stability, thereby improving processability.

However, in Comparative Example 7, in which the waste liquid was not recycled, the viscosity of the mixture of the vinyl chloride polymer slurry and the alcohol was high, resulting in a high screw load of the centrifuge during the centrifugal separation of the mixture.

In addition, in Comparative Example 8, in which the content of the second waste liquid was 32.2 parts by weight with respect to 100 parts by weight of the mixture of the vinyl chloride polymer slurry and the alcohol, the viscosity of the mixture of the vinyl chloride polymer slurry, the alcohol, and the second waste liquid was high. This led to a high screw load of the centrifuge during the centrifugal separation of the mixture.

In addition, in Comparative Example 9, in which the content of the second waste liquid was 35.8 parts by weight with respect to 100 parts by weight of the mixture of the vinyl chloride polymer slurry and the alcohol, the second wet vinyl chloride polymer powder was not properly dried, thus a normal second dry vinyl chloride polymer powder was not produced.

Further, referring to Examples 1 to 9, it could be predicted that as the alcohol content increased, the melting time was reduced, thereby improving processability.

### [Description of Reference Numerals]

10: Vinyl chloride polymer slurry transfer pipe
20: Alcohol transfer pipe
30: Mixture transfer pipe
40: Wet vinyl chloride polymer powder transfer pipe
50: Dry vinyl chloride polymer powder transfer pipe
61, 62, 72, 80: Waste liquid transfer pipe
71: Alcohol transfer pipe
100: Mixer
200: Centrifuge
300: Dryer
400: Oil-water separator
500: Waste liquid storage tank

## Claims

1. A method of preparing a vinyl chloride polymer, comprising:
preparing a mixture by adding an alcohol to a vinyl chloride polymer slurry (S1);
separating a waste liquid from the mixture to obtain a vinyl chloride polymer (S2); and
adding at least a portion of the separated waste liquid to the mixture (S3);
wherein a content of the waste liquid added in Step S3 is in a range of 33.0 to 35.0 parts by weight with respect to 100 parts by weight of the mixture.

2. The method of preparing a vinyl chloride polymer according to claim 1, wherein the alcohol is a C₄ to C₂₀ alkyl alcohol.

3. The method of preparing a vinyl chloride polymer according to claim 1, wherein a content of the alcohol is in a range of 0.105 to 0.123 parts by weight with respect to 100 parts by weight of a solid content of the vinyl chloride polymer slurry.

4. The method of preparing a vinyl chloride polymer according to claim 1, wherein in Step S2, the separation is centrifugal separation.

5. The method of preparing a vinyl chloride polymer according to claim 1, further comprising drying the vinyl chloride polymer obtained in Step S2.

6. The method of preparing a vinyl chloride polymer according to claim 1, wherein the waste liquid added in Step S3 is prepared by separating the alcohol from a portion of the waste liquid separated in Step S2 and mixing the separated alcohol with the remainder of the separated waste liquid.

7. The method of preparing a vinyl chloride polymer according to claim 6, wherein a content of a portion of the waste liquid separated in Step S2 is in a range of 62.5 to 64.0 wt% with respect to the total weight of the waste liquid separated in Step S2.

8. The method of preparing a vinyl chloride polymer according to claim 6, wherein the alcohol is subjected to oil-water separation.

9. The method of preparing a vinyl chloride polymer according to claim 1, wherein in the waste liquid added to the mixture, the alcohol is present in an amount of 2.0 to 3.0 wt%.

10. The method of preparing a vinyl chloride polymer according to claim 1, wherein a content of the residual alcohol in the vinyl chloride polymer is in a range of 500 to 600 ppm.
